# EUROPEAN PATENT SPECIFICATION

(11) **EP 4 389 824 B1**
(45) Date of publication and mention of the grant of the patent: **30.04.2025**
(21) Application number: 22214789.4
(22) Date of filing: 20.12.2022
(51) Int. Cl.: C08L 69/00, C08L 83/10

(54) **A POLYCARBONATE COMPOSITION WITH IMPROVED FLAME PROPERTIES**
POLYCARBONATZUSAMMENSETZUNG MIT VERBESSERTEN FLAMMEIGENSCHAFTEN
COMPOSITION DE POLYCARBONATE AYANT DES PROPRIÉTÉS DE FLAMME AMÉLIORÉES

(43) Date of publication of application: 26.06.2024
(73) Proprietor: SABIC Global Technologies B.V., 4612 PX Bergen op Zoom (NL)
(72) Inventor: Sadafi, Fabrizio, 6160 GA Geleen (NL); van der Wal, John Hendricus, 6160 GA Geleen (NL)
(74) Representative: Sabic Intellectual Property Group

(56) References cited:
- WO-A1-2022/190000

## Description

### FIELD OF INVENTION

The invention relates to a polycarbonate compositions having improved flame retardant properties and to articles prepared from such polycarbonate compositions. The invention further relates to the use of such polycarbonate compositions for improving the flame retardant properties of components used in mass transportation.

### BACKGROUND

While most thermoplastic materials burn easily, the major requirement for such material to be used in mass transportation vehicle interiors is to comply the fire/flame resistance requirements set by different regulatory norms. For instance, the European rail industry is ruled by the EN45545-2 norm, which consists of three tests; heat release, smoke density and spread of flames. These define the standards a material needs to fulfill in order to be used for train interiors. The norm sets different risk and hazard levels that define the flame resistance standards a material needs to fulfil in order to be used for a certain application. Risks are classified with numbers ranging from 1 (most stringent) up to 26 (less stringent), 1 being associated with horizontal and vertical interior surfaces like ceilings, walls, window frames or display screens and 26 with small electronic parts.

The hazard levels are associated with the design and the operation of railway vehicles and are three; HL1 (less stringent), HL2 and HL3 (most stringent). In particular, to comply with EN45545-2 R1-HL2, a sample must have Heat Release (less than or equal) ≤ 90.0 kW/m², Ds4 (less than or equal) ≤ 300.0, VOF4 (less than or equal) ≤ 600.0 (referring to smoke density) and CFE (greater than or equal to) ≥ 20.0 kW/m² (referring to spread of flames). While to comply with EN45545-2 R1-HL3, a sample must have Heat Release ≤ 60.0 kW/m², Ds4 ≤ 150.0, VOF4 ≤ 300.0 and CFE ≥ 20.0 kW/m².

Due to certain inherent advantages, such as its mechanical properties, relatively low density, ease of processing, ability to modify long term stability, polycarbonate based material are of high interest to the mass transportation industry for fabricating train and aircraft interiors. In addition, from the perspective of cost as sustainability consideration such as CO₂ emission reduction offered by polycarbonate as compared to competing materials such as aluminum or thermosets, there is an increased interest in using polycarbonate based materials for applications in the interiors of mass transportation systems, which are required to meet stringent flame regulatory criteria. Due to the challenge in enhancing the flame resistance properties, the use of polycarbonate based materials are currently limited to few specific applications such as armrests or lighting where the norms are relatively less stringent or have no regulatory requirements.

In the past, a possible approach for improving the flame/fire retarding properties of a thermoplastic material is by compounding polymers with flame retardant additives. However, flame retardant additives need to be selected and used judiciously and in limited quantity, as excess use of such additives may affect polymer properties such as rheology and mechanical properties thereby affecting processing of such polymers.

WO 2022/190000 A1 discloses a polycarbonate composition comprising a polycarbonate component, a poly(carbonate-siloxane) copolymer, a reinforcing composition comprising glass fibers and a mineral filler, and an organophosphorus flame retardant.

An alternate approach for improving the flame retardant properties of polycarbonates has been the use of polar functionalized polymer such as polyetherimide. For instance, industry practitioners have previously developed polyetherimide (PEI), polyphenylene oxide (PPO), which impart fire/flame resistance to polycarbonate based material. However, such grades presents processing related disadvantages due to its higher density, lower mechanical properties and significantly higher costs and therefore may not be ideal choice for a price sensitive and high performance demanding markets like rail and aircraft industries.

Therefore, it is an object of the present invention to provide a polycarbonate based composition which has desirable flame retardant properties and may be used in mass transport applications. Yet another objective of the present invention is to provide a composition which complies with EN45545-2 R1-HL2 and EN45545-2 R1-HL3 requirements without the need of adding additional flame retardants. Another, objective of the present invention is to provide articles prepared from such polycarbonate based compositions, which comply with EN45545-2 R1-HL2 and/or EN45545-2 R1-HL3 flame retardant requirements.

### DESCRIPTION

Accordingly, the one or more objectives of the present invention is achieved by the composition comprising, based on the total weight of the composition:
(a) from 5.0 wt.% to 55.0 wt.% of at least one poly(carbonate-siloxane-arylate ester) copolymer;
(b) from 10.0 wt.% to 45.0 wt.% of at least one brominated polycarbonate;
(c) from 12.0 wt.% to 20.0 wt.% of glass fiber; and
(d) at least one polycarbonate polymer (PC1) selected from the group consisting of:
   i. a poly(carbonate-siloxane) copolymer, wherein if selected, is present in an amount from 10.0 wt.% to 50.0 wt.%;
   ii. a polycarbonate homopolymer, wherein if selected, is present in an amount from 5.0 wt.% to 20.0 wt.%; and
   iii. a combination of i) and ii);
wherein the at least one poly(carbonate-siloxane) copolymer is free of repeat units derived from arylate ester; and wherein the polycarbonate homopolymer is free of bromine.

The sum of the components (a)-(d) and any optional additives is 100 wt.%. The optional additives, if present in the composition, may be present in an amount of not greater than 5.0 wt.%, preferably not greater than 2.5 wt.%, preferably not greater than 1.0 wt.%, based on the total weight of the composition.

Preferably, wherein based on the total weight of the composition:
- the amount of poly(carbonate-siloxane-arylate ester) copolymer present is from 10.0 wt.% to 45.0 wt.%, preferably from 20.0 wt.% to 45.0 wt.%, preferably from 20.0 wt.% to 40.0 wt.%, preferably from 25.0 wt.% to 40.0 wt.%, preferably from 30.0 wt.% to 40.0 wt.%;
- the amount of brominated polycarbonate present is from 20.0 wt.% to 40.0 wt.%, preferably from 25.0 wt.% to 40.0 wt.%, preferably from 25.0 wt.% to 35.0 wt.%; and
- the amount of glass fiber is from 12.0 wt.% to 18.0 wt.% of the glass fiber.

Preferably, wherein if the amount of poly(carbonate-siloxane-arylate ester) copolymer is greater than 30.0 wt.% the amount of brominated polycarbonate is at least 20.0 wt.%, based on the total weight of the composition.

Preferably, wherein based on the total weight of the composition,
- the amount of poly(carbonate-siloxane) copolymer present is from 12.0 wt.% to 45.0 wt.%, preferably from 12.0 wt.% to 25.0 wt.%, preferably from 12.0 wt.% to 20.0 wt.%; and/or
- the amount of polycarbonate homopolymer present is from 5.0 wt.% to 18.0 wt.%, preferably from 12.0 wt.% to 18.0 wt.%.

The poly(carbonate-siloxane) copolymer is free of repeat units derived from arylate ester thereby rendering the poly(carbonate-siloxane) copolymer to be distinct over that of the poly(carbonate-siloxane-arylate ester) copolymer. The term "free of repeat units derived from arylate ester" means that the poly(carbonate-siloxane) copolymer has 0.0 wt.% of units derived from arylate ester.

The polycarbonate homopolymer is free of bromine thereby rendering such a homopolymer to be distinct from the brominated polycarbonate. The term "free of bromine" mean means that the polycarbonate homopolymer comprises 0.0 wt.% of polymeric units containing atomic bromine or bromine based compounds.

Advantageously, the inventors found that articles prepared from the composition of the present invention demonstrate excellent flame retardant properties and complies with the standards of EN45545-2 norms. In particular, articles prepared from the composition of the present invention complies with the stringent R1-HL2 and/or R1-HL3 EN45545-2 criteria, with the article having up to 3 mm material thickness.

The composition comprises less than 0.5 wt.%, preferably less than 0.01 wt.%, preferably 0.0 wt.%, based on the total weight of the composition, of additional flame retardant compounds. Preferably wherein the additional flame retardant compounds are selected from organic phosphates, polyetherimide (PEI), polyphenylene ether (PPE), aromatic organophosphorus compounds having two or more phosphorus-containing groups, organic compounds containing phosphorus-nitrogen bonds, halogenated flame retardants, inorganic flame retardants and combinations thereof.

The term "additional flame retardant compounds" means flame retardant compounds other than poly(carbonate-siloxane-arylate ester) copolymer, poly(carbonate-siloxane) copolymer, brominated polycarbonate, and any of polycarbonate polymer (PC1), glass fiber, which may or may not have certain flame retardant properties of its own.

The inventors found that the composition demonstrates R1-HL2 EN45545-2 ("HL2") and R1-HL3 EN45545-2 ("HL3") criteria even without the need of using any additional flame retardant compounds.

For example, the composition has or is selected to have:
- a smoke density after 4 minutes (Ds4) of less than or equal to 300.0, preferably less than or equal to 250.0, preferably less than or equal to 200.0, preferably less than or equal to 150.0, preferably less than or equal to 130.0, determined according to ISO 5659-2 on a 3 millimeter thick plaque at 50.0 kW/m²;
- a smoke density (VOF4) of less than or equal to 600.0, preferably less than or equal to 500.0, preferably less than or equal to 400.0, preferably less than or equal to 300.0, preferably less than or equal to 250.0, determined in accordance with ISO 5659-2 on a 3.0 millimeter thick plaque at 50.0 kW/m²;
- a maximum average heat release (MAHRE) of less than or equal to 90.0 kW/m², preferably less than or equal to or less than 80.0 kW/m², preferably less than or equal to or less than 60.0 kW/m² measured according to ISO 5660-1 on a 3 millimeter thick plaque at 50.0 kW/m²; and
- a critical heat flux at extinguishment (CFE) of greater than or equal to 20.0 kW/m², preferably greater than or equal to 22.0 kW/m², preferably greater than or equal to 25.0 kW/m² determined in accordance with ISO 5658-2.

In an aspect of the invention, the composition complies with R1-HL3 EN45545-2 ("HL3") criteria. Preferably, the composition has or is selected to have:
- a smoke density after 4 minutes (Ds4) of less than or equal to 150.0, preferably less than or equal to 130.0, preferably less than or equal to 100.0, determined according to ISO 5659-2 on a 3 millimeter thick plaque at 50.0 kW/m²;
- a smoke density (VOF4) of less than or equal to 300.0, preferably less than or equal to 250.0, preferably less than or equal to 200.0, preferably less than or equal to 150.0, preferably less than or equal to 140.0, determined in accordance with ISO 5659-2 on a 3.0 millimeter thick plaque at 50.0 kW/m²;
- a maximum average heat release (MAHRE) of less than or equal to 60.0 kW/m², preferably less than or equal to 50.0 kW/m², preferably less than or equal to 45.0 kW/m^{2,} preferably less than or equal to 40.0 kW/m² measured according to ISO 5660-1 on a 3 millimeter thick plaque at 50.0 kW/m²; and
- a critical heat flux at extinguishment (CFE) of greater than or equal to 20.0 kW/m², preferably greater than or equal to 22.0 kW/m², preferably greater than or equal to 25.0 kW/m² determined in accordance with ISO 5658-2.

The composition may have a smoke density after 4 minutes (Ds4) from 55.0 to less than or equal to 300.0, preferably from 60.0 to less than or equal to 250.0, preferably from 60.0 to less than or equal to 200.0, preferably from 55.0 to less than or equal to 200.0, preferably from 60.0 to less than or equal to 100.0, determined according to ISO 5659-2 on a 3.0 millimeter thick plaque at 50.0 kW/m².

The composition may have a smoke density (VOF4) from 55.0 to less than or equal to 600.0, preferably from 80.0 to less than or equal to 550.0, preferably from 100.0 to less than or equal to 500.0, preferably from 100.0 to less than or equal to 500.0, preferably from 100.0 to less than or equal to 300.0, preferably from 100.0 to less than or equal to 250.0, determined in accordance with ISO 5659-2 on a 3.0 millimeter thick plaque at 50.0 kW/m².

The composition may have a maximum average heat release (MAHRE) from 25.0 to less than or equal to 90.0 kW/m², preferably from 35.0 to less than or equal to or less than 80.0 kW/m², preferably from 40.0 to less than or equal to or less than 60.0 kW/m² measured according to ISO 5660-1 on a 3 millimeter thick plaque at 50 kW/m².

The composition may have a critical heat flux at extinguishment (CFE) of greater than or equal to 20.0 kW/m² to at most 40.0 kW/m², preferably greater than or equal to 22.0 kW/m² to at most 35.0 kW/m², preferably greater than or equal to 25.0 kW/m² to at most 35.0 kW/m² determined in accordance with ISO 5658-2.

Accordingly, in an aspect of the invention, the invention relates to an article comprising the composition of the present invention, preferably wherein the article is suitable to be used in mass transportation systems. Preferably wherein the article is at least any one of a railway component, an aerospace component or an automobile component. The article may comprise the composition of the present invention in an amount of at least 90.0 wt.%, preferably at least 95.0 wt.%, preferably at least 98.0 wt.%, preferably at least 99.0 wt.%, preferably 100 wt.%, based on the total weight of the article.

In another aspect of the invention, the invention relates to the use of the composition according to the present invention for improving flame retardant properties of an article used in mass transportation systems.

### Polycarbonate polymer (PC1) may be a poly(carbonate-siloxane) copolymer

The polycarbonate polymer (PC1) may be a poly(carbonate-siloxane) copolymer. Accordingly, the composition may comprise, based on the total weight of the composition:
(a) from 5.0 wt.% to 55.0 wt.% of the at least one poly(carbonate-siloxane-arylate ester) copolymer;
(b) from 10.0 wt.% to 45.0 wt.% of the at least one brominated polycarbonate;
(c) from 12.0 wt.% to 20.0 wt.% of the glass fiber; and
(d) the at least one polycarbonate polymer (PC1) is the poly(carbonate-siloxane) copolymer, present in an amount from 10.0 wt.% to 50.0 wt.%.

Preferably, wherein when the polycarbonate polymer (PC1) is the poly(carbonate-siloxane) copolymer, the composition comprises 0.0 wt.% of the polycarbonate homopolymer.

Alternatively, the composition may comprise, based on the total weight of the composition:
(a) from 10.0 wt.% to 45.0 wt.% of the at least one poly(carbonate-siloxane-arylate ester) copolymer;
(b) from 25.0 wt.% to 40.0 wt.% of the at least one brominated polycarbonate;
(c) from 12.0 wt.% to 20.0 wt.% of the glass fiber; and
(d) the at least one polycarbonate polymer (PC1) is the poly(carbonate-siloxane) copolymer, present in an amount from 12.0 wt.% to 48.0 wt.%, preferably from 12.0 wt.% and 40.0 wt.%, preferably from 12.0 wt.% to 25.0 wt.%, preferably from 12.0 wt.% to 20.0 wt.%.

The composition may comprise, based on the total weight of the composition:
(a) from 30.0 wt.% to 45.0 wt.% of the at least one poly(carbonate-siloxane-arylate ester) copolymer;
(b) from 25.0 wt.% to 40.0 wt.% of the at least one brominated polycarbonate;
(c) from 12.0 wt.% to 20.0 wt.% of the glass fiber; and
(d) the at least one polycarbonate polymer (PC1) is a poly(carbonate-siloxane) copolymer, present in an amount from 12.0 wt.% to 48.0 wt.%, preferably 12.0 wt.% to 40.0 wt.%, preferably 12.0 wt.% to 25.0 wt.%, preferably from 12.0 wt.% to 20.0 wt.%.

The composition may comprise, based on the total weight of the composition:
(a) from 30.0 wt.% to 40.0 wt.% of the at least one poly(carbonate-siloxane-arylate ester) copolymer;
(b) from 25.0 wt.% to 35.0 wt.% of the at least one brominated polycarbonate;
(c) from 12.0 wt.% to 20.0 wt.% of the glass fiber; and
(d) the at least one polycarbonate polymer (PC1) is a poly(carbonate-siloxane) copolymer, present in an amount from 12.0 wt.% to 48.0 wt.%, preferably from 12.0 wt.% to 40.0 wt.%, preferably from 12.0 wt.% to 25.0 wt.%, preferably from 12.0 wt.% to 20.0 wt.%.

### Polycarbonate polymer (PC1) may be a polycarbonate homopolymer

Alternatively, the composition may comprise, based on the total weight of the composition:
(a) from 5.0 wt.% to 55.0 wt.% of the at least one poly(carbonate-siloxane-arylate ester) copolymer;
(b) from 10.0 wt.% to 45.0 wt.% of the at least one brominated polycarbonate;
(c) from 12.0 wt.% to 20.0 wt.% of the glass fiber; and
(d) the at least one polycarbonate polymer (PC1) is a polycarbonate homopolymer, present in an amount from 5.0 wt.% to 20.0 wt.%.

Preferably, wherein when the polycarbonate polymer (PC1) is polycarbonate homopolymer, the composition comprises 0.0 wt.% of poly(carbonate-siloxane) copolymer.

Preferably, wherein based on the total weight of the composition:
- the amount of poly(carbonate-siloxane-arylate ester) copolymer is from 20.0 wt.% to 45.0 wt.%;
- the amount of brominated polycarbonate is from 25.0 wt.% to 40.0 wt.%;
- the amount of glass fiber is from 12.0 wt.% to 18.0 wt.% of the glass fiber; and
- the amount of polycarbonate homopolymer is from 5.0 wt.% to 18.0 wt.%, preferably from 12.0 wt.% to 18.0 wt.%.

Preferably, wherein based on the total weight of the composition:
- the amount of poly(carbonate-siloxane-arylate ester) copolymer is from 20.0 wt.% to 45.0 wt.%;
- the amount of brominated polycarbonate is from 25.0 wt.% to 40.0 wt.%;
- the amount of glass fiber is from 12.0 wt.% to 18.0 wt.% of the glass fiber; and
- the amount of polycarbonate homopolymer is from 5.0 wt.% to 18.0 wt.%, preferably from 12.0 wt.% to 18.0 wt.%.

Preferably, wherein when the polycarbonate polymer (PC1) is polycarbonate homopolymer, the composition comprises 0.0 wt.% of poly(carbonate-siloxane) copolymer.

In an aspect of the invention, the composition complies with R1-HL3 EN45545-2 ("HL3") criteria.

Preferably, wherein based on the total weight of the composition:
- the poly(carbonate-siloxane-arylate ester) copolymer is present in an amount from 20.0 wt.% to 40.0 wt.%, preferably from 30.0 wt.% to 40.0 wt.%;
- the brominated polycarbonate is present in an amount from 20.0 wt.% to 40.0 wt.%; preferably from 25.0 wt.% to 40.0 wt.%, preferably from 30.0 wt.% to 40.0 wt.%;
- the glass fiber is present in an amount from 12.0 wt.% to 18.0 wt.%; and
- the polycarbonate homopolymer is a linear polycarbonate homopolymer, present in an amount from 12.0 wt.% to 18.0 wt.%:
preferably wherein the composition has or selected to have:
(i) a smoke density after 4 minutes (Ds4) of less than or equal to 150.0 determined according to ISO 5659-2 on a 3.0 millimeter thick plaque at 50.0 kW/m²;
(ii) a smoke density (VOF4) of less than or equal to 300.0 determined in accordance with ISO 5659-2 on a 3.0 millimeter thick plaque at 50.0 kW/m²;
(iii) a maximum average heat release (MAHRE) of equal to or less than 60.0 kW/m² measured according to ISO 5660-1 on a 3.0 millimeter thick plaque at 50.0 kW/m²; and
(iv) a critical heat flux at extinguishment (CFE) of greater than or equal to 20.0 kW/m² determined in accordance with ISO 5658-2.

Preferably, when the polycarbonate homopolymer is a linear polycarbonate homopolymer, the composition comprises 0.0 wt.% of poly(carbonate-siloxane) copolymer.

### Polycarbonate polymer (PC1) may comprise both the polycarbonate homopolymer and the poly(carbonate-siloxane) copolymer

Accordingly, the composition may comprise, based on the total weight of the composition:
(a) from 5.0 wt.% to 45.0 wt.%, preferably from 20.0 wt.% to 45.0 wt.%, of the at least one poly(carbonate-siloxane-arylate ester) copolymer;
(b) from 10.0 wt.% to 45.0 wt.%, preferably from 15.0 wt.% to 40.0 wt.%, of the at least one brominated polycarbonate;
(c) from 12.0 wt.% to 20.0 wt.% of the glass fiber; and
(d) the at least one polycarbonate polymer (PC1) comprises:
   - a polycarbonate homopolymer, present in an amount from 5.0 wt.% to 20.0 wt.%, preferably 5.0 wt.% to 15.0 wt.%; and
   - a poly(carbonate-siloxane) copolymer, present in an amount from 10.0 wt.% to 25.0 wt.%, preferably from 10.0 wt.% to 20.0 wt.%.

### Poly(carbonate-siloxane-arylate ester) copolymer

The poly(carbonate-siloxane-arylate ester) copolymer comprises or consists of repeat units of aromatic carbonate units, siloxane units, and aromatic ester (arylate) units. The poly(carbonate-siloxane-arylate ester) copolymer may comprise 0.2 to 10.0 wt % siloxane units, 50.0 to 99.6 wt % arylate ester units, and 0.2 to 49.8 wt % aromatic carbonate units, based on the total weight of the poly(carbonate-siloxane-arylate ester) copolymer.

Preferably, the poly(carbonate-siloxane-arylate ester) copolymer comprises 0.25 wt.% to 2.0 wt .% of siloxane units, 60.0 to 94.75 wt % of arylate ester units, and 3.25 to 39.75 wt % aromatic carbonate units, wherein the combined weight percentages of the siloxane units, arylate ester units, and the aromatic carbonate units is 100.0 wt.% of the total weight of the poly(carbonate-siloxane-arylate ester) copolymer.

Preferably, the poly(carbonate-siloxane-arylate ester) copolymer has a silicon content of less than 3.0 wt.%, preferably less than 1.5 wt.%, preferably the silicon content is 1.0 wt.%, based on the total weight of the poly(carbonate-siloxane-arylate ester) copolymer. Preferably, the poly(carbonate-siloxane-arylate ester) copolymer has a silicon content of greater than 0.0 wt.% and less than 3.0 wt.%, preferably greater than 0.0 and less than 1.5 wt.%, preferably the silicon content is 1.0 wt.%, based on the total weight of the poly(carbonate-siloxane-arylate ester) copolymer.

The poly(carbonate-siloxane-arylate ester) copolymer is present in an amount from 5.0 wt.% to 55.0 wt.%, preferably from 10.0 wt.% to 55.0 wt.%, preferably from 10.0 wt.% to 45.0 wt.%, preferably from 20.0 wt.% to 45.0 wt.%, preferably from 25.0 wt.% to 45.0 wt.%, preferably from 30.0 wt.% to 45.0 wt.%, preferably from 25.0 wt.% to 40.0 wt.%, preferably from 30.0 wt.% to 40.0 wt.%, based on the total weight of the composition.

### Aromatic Carbonate units

The aromatic carbonate units are repeating units of formula (1) 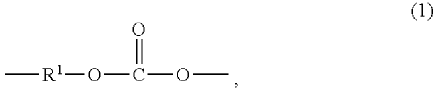 wherein at least 60 percent of the total number of R¹ groups are aromatic, or each R¹ contains at least one C₆₋₃₀ aromatic group.

Specifically, each R¹ may be derived from a dihydroxy compound such as an aromatic dihydroxy compound of formula (2) or a bisphenol of formula (3).

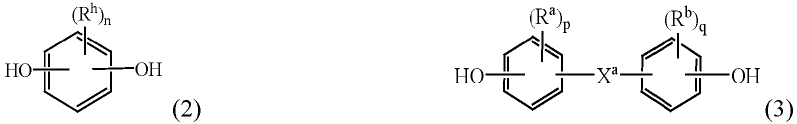

In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen.

Preferably, p and q is each 0, or p and q is each 1, and R^{a} and R^{b} are each a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, -S(O)₂-, -C(O)-, or a C₁₋₁₈ organic group, which may be cyclic or acyclic, aromatic or nonaromatic, and can further comprise heteroatoms such as halogens, oxygen, nitrogen, sulfur, silicon, or phosphorous.

For example, X^{a} may be a substituted or unsubstituted C₃₋₁₈ cycloalkylidene; a C₁₋₂₅ alkylidene of the formula -C(R^{c})(R^{d})-wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})-wherein R^{e} is a divalent C₁₋₁₂ hydrocarbon group.

Preferably, the aromatic carbonate units present in the poly(carbonate-siloxane-arylate ester) copolymer may comprise aromatic carbonate repeat units of formula 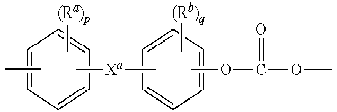 wherein R^{a} and R^{b} are each independently C₁₋₁₂ alkyl, C₁₋₁₂ alkenyl, C₃₋₈ cycloalkyl, or C₁₋₁₂ alkoxy, p and q are each independently 0 to 4, and X^{a} is a single bond, -O-, -S-, - S(O)-, -S(O)₂-, -C(O)-, a C₁₋₁₁ alkylidene of formula -C(R^{c})(R^{d})- wherein R^{c} and R^{d} are each independently hydrogen or C₁₋₁₀ alkyl, or a group of the formula -C(=R^{e})- wherein R^{e} is a divalent C₁₋₁₀ hydrocarbon group, preferably X^{a} is a C₁₋₁₁ alkylidene of formula -C(R^{c})(R^{d})-wherein R^{c} and R^{d} are each independently C₁₋₆ alkyl.

Preferably, wherein the aromatic carbonate units, are selected from bisphenol A carbonate units, resorcinol carbonate units, and combinations thereof. Preferably, wherein the aromatic carbonate units are derived from bisphenol A carbonate units and resorcinol carbonate units.

### Arylate ester units

The poly(carbonate-siloxane-arylate ester) copolymer further comprises arylate ester units, i.e., ester units based on an aromatic dicarboxylic acid repeating ester units of formula (4) 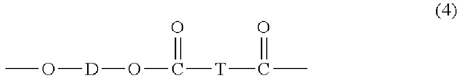 wherein D is a divalent group derived from a dihydroxy compound, and may be, a C₆₋₂₀ alicyclic group or a C₆₋₂₀ aromatic group; and T is a divalent C₆₋₂₀ arylene group. In an embodiment, D is derived from a dihydroxy aromatic compound of formula (2), or bisphenol of formula (3), or a combination comprising at least one of the foregoing aromatic compounds.

The D and T groups are desirably minimally substituted with hydrocarbon-containing substituents such as alkyl, alkoxy, or alkylene substituents. In an embodiment, less than 5.0 mol %, preferably less than or equal to 2.0 mol %, and preferably less than or equal to 1.0 mol % of the combined number of moles of D and T groups are substituted with hydrocarbon-containing substituents such as alkyl, alkoxy, or alkylene substituents.

Examples of aromatic dicarboxylic acids from which the T group in the ester unit of formula (4) is derived include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of isophthalic acid to terephthalic acid is 99:1 to 1:99.

Preferably, the arylate units are derived from the reaction product of one equivalent of an isophthalic acid derivative and/or terephthalic acid derivative. Accordingly, the arylate units of formula (5) 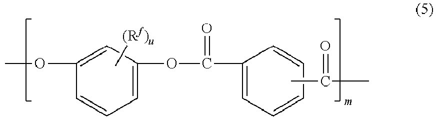 wherein each R^{f} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and u is 0 to 4, and 'm' is greater than or equal to 4.0.

Preferably, 'm' is 4.0 to 150.0, preferably 4.0 to 100.0, preferably 5.0 to 30.0, preferably 5.0 to 25, preferably10.0 to 20.0. In another embodiment, 'm' is 4.0 to 150.0, preferably 10.0 to 100.0, preferably 30.0 to 100.0, preferably 50.0 to 100.0, preferably 60.0 to 90.0.

Preferably, the molar ratio of isophthalate to terephthalate is from 0.25:1 to 9.0:1. Preferred arylate ester units are isophthalate-terephthalate-resorcinol ester units, isophthalate-terephthalate-bisphenol ester units, or a combination comprising each of these, which may be referred to respectively as poly(isophthalate-terephthalate-resorcinol) ester units, poly(isophthalate-terephthalate-bisphenol-A) ester units, and poly[(isophthalate-terephthalate-resorcinol) ester-co-(isophthalate-terephthalate-bisphenol-A)] ester units.

Preferably, the aromatic carbonate units and the ester units are present as blocks of formula (6) 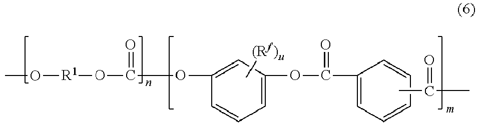 wherein R^{f}, u, and m are as defined in formula (5), each R¹ is independently a C₆₋₃₀ arylene group, and n is greater than or equal to one, for example 1 to 50, specifically from 3 to 25, and more specifically from 5 to 20. Preferably, m is 5 to 100 and n is 3 to 50, or m is 50 to 90 and n is 5 to 20, and the molar ratio of isophthalate units to terephthalate units is 80:20 to 20:80.

It is preferred that the carbonate units are bisphenol A carbonate units, optionally together with resorcinol carbonate units, and the arylate units are poly(isophthalate-terephthalate-resorcinol) ester units, poly(isophthalate-terephthalate-bisphenol-A) ester units, and poly[(isophthalate-terephthalate-resorcinol) ester-co-(isophthalate-terephthalate-bisphenol-A)] ester units.

Preferably, the aromatic carbonate and arylate units are present as a poly(isophthalate-terephthalate-resorcinol ester)-co-(resorcinol carbonate)-co-(bisphenol-A carbonate) segment.

Preferred arylate units are isophthalate-terephthalate-resorcinol ester units, isophthalate-terephthalate-bisphenol ester units, or a combination comprising each of these. Alternatively, such arylate ester units may be referred to respectively as poly(isophthalate-terephthalate-resorcinol) ester units, poly(isophthalate-terephthalate-bisphenol-A) ester units, and poly[(isophthalate-terephthalate-resorcinol) ester-co-(isophthalate-terephthalate-bisphenol-A)] ester units.

### Siloxane units

The siloxane units of the poly(carbonate-siloxane-arylate ester) copolymer are present as polydiorganosiloxane (also referred to herein as "polysiloxane") blocks comprise repeating diorganosiloxane ("siloxane") units as in formula (7) 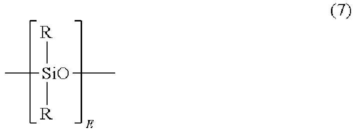 wherein each 'R' is independently a C₁₋₁₃ monovalent organic group. For example, 'R' may be independently be selected from a C₁-C₁₃ alkyl, C₁-C₁₃ alkoxy, C₂-C₁₃ alkenyl, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups may be fully or partially halogenated with fluorine, chlorine, bromine, or iodine, or a combination thereof. Preferably, where a transparent polysiloxane-polycarbonate is desired, 'R' is unsubstituted by halogen. Combinations of the foregoing 'R' groups may be used in the same copolymer.

The value of 'E' in formula (7) can vary widely depending on the type and relative amount of each component in the copolymer and composition containing the copolymer, the desired properties of the composition, and like considerations. Generally, E may have an average value from 2.0 to 1,000, preferably from 2.0 to 500.0, preferably from 2.0 to 200.0, preferably from 2.0 to 100.0, preferably from 5.0 to 60.0, preferably from 5.0 to 50.0, preferably from 5.0 to 20.0. Preferably, 'E' has an average value from 2.0 to 200.0, preferably from 2.0 to 125.0, preferably from 5.0 to 125.0, preferably from 5.0 to 100.0, preferably from 5.0 to 50.0, preferably from 20.0 to 80.0, preferably from 5.0 to 20.0.

Preferably, 'E' ranges from 5.0 to 25.0, preferably from 5.0 to 15.0, preferably from 30.0 to 80.0, preferably from 30.0 to 70.0.

Preferably, the siloxane blocks are of formula (8) 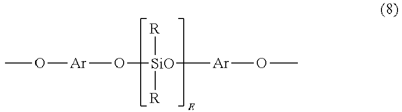 wherein 'E' is as defined in formula (7); each 'R' may be the same or different, and is as defined above; and 'Ar' may be the same or different, and is a substituted or unsubstituted C₆-C₃₀ arylene, wherein the bonds are directly connected to an aromatic moiety.

The 'Ar' groups in formula (8) may be derived from a C₆-C₃₀ dihydroxyarylene compound. The dihydroxyarylene compounds may be selected from 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

Preferably, the 'Ar' group is derived from resorcinol. Preferably, the Ar group is derived from bisphenol A.

Preferably, polydiorganosiloxane blocks are of formula (9) 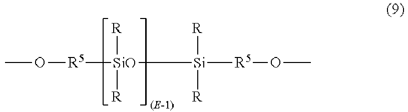 wherein 'R' and 'E' are as described in formula (7), and each R⁵ is independently a divalent C₁-C₃₀ organic group, and wherein the polymerized polysiloxane unit is the reaction residue of its corresponding dihydroxy compound.

Preferably, the polydiorganosiloxane blocks are of formula (10): 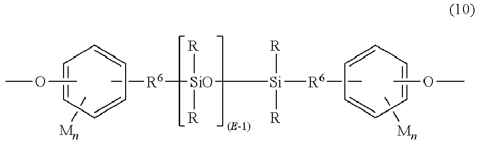 wherein 'R' and 'E' are as defined above. R⁶ in formula (10) is a divalent C₂-C₈ aliphatic. Each M in formula (10) may be the same or different, and may be a halogen, cyano, nitro, C₁-C₈ alkylthio, C₁-C₈ alkyl, C₁-C₈ alkoxy, C₂-C₈ alkenyl, C₂-C₈ alkenyloxy, C₃-C₈ cycloalkyl, C₃-C₅ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

Preferably, the siloxane units are of the formula: 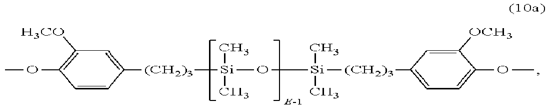 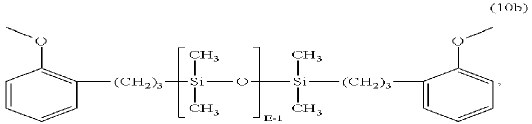 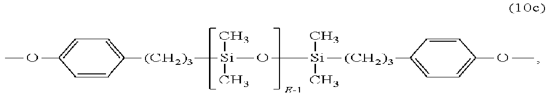 or a combination comprising at least one of the foregoing, wherein 'E' has an average value from 2.0 to 200.0, preferably from 2.0 to 125.0, preferably from 5.0 to 125.0, preferably from 5.0 to 100.0, preferably from 5.0 to 50.0, preferably from 20.0 to 80.0, preferably from 5.0 to 20.0.

Preferably, the poly(carbonate-siloxane-arylate ester) copolymer comprises or consists of repeat units derived from (i) arylate ester units, preferably wherein the arylate ester units are isophthalate-terephthalate-resorcinol (ITR) ester units; (ii) aromatic carbonate units, preferably wherein the aromatic carbonate units are selected from bisphenol A carbonate units, resorcinol carbonate units, and combinations thereof; and (iii) siloxane units selected from the formula: 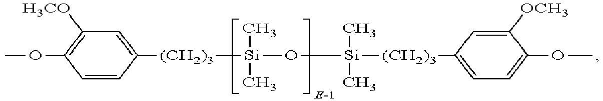 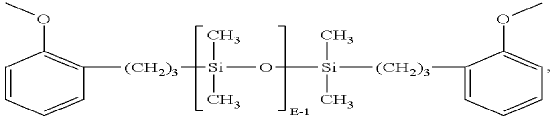 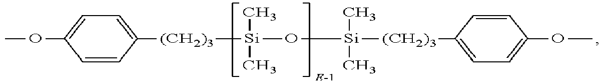 and any combination thereof, wherein 'E' has an average value from 2.0 to 200.0, preferably from 2.0 to 125.0, preferably from 5.0 to 125.0, preferably from 5.0 to 100.0, preferably 5.0 to 50.0, preferably from 20.0 to 80.0, preferably from 5.0 to 20.0.

Preferably the poly(carbonate-siloxane-arylate ester) copolymer is represented by the formula: 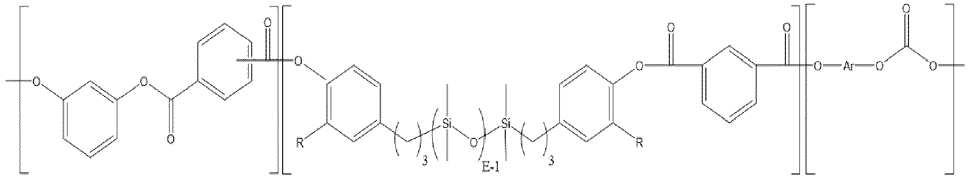 wherein 'Ar' represents an aromatic moiety, preferably 'Ar' represents an aromatic moiety derived from Bisphenol A and 'R' represents and C₁₋₁₀ alkyl group, preferably 'R' is a methyl group. The poly(carbonate-siloxane) copolymer may be endcapped with para-cumyl phenol.

Preferably, the poly(carbonate-siloxane-arylate ester) copolymer is a poly(bisphenol-A-carbonate)-co-poly(isophthalate-terephthalate-resorcinol-ester)-co-poly(siloxane).

Preferably the poly(carbonate-siloxane-arylate ester) copolymer is a poly(bisphenol A/resorcinol carbonate-resorcinol phthalate-dimethyl siloxane).

The poly(bisphenol A/resorcinol carbonate-resorcinol phthalate-dimethyl siloxane) copolymer may comprise from 5.0 to 20.0 mole percent (mol%) of bisphenols A carbonate repeat units, from 5.0 to 20.0 mol.% of resorcinol carbonate units, from 75.0 to 90.0 mol% of resorcinol phthalate ester units with an isophthalate:terephthalate ratio of 1:0.5 to 0.5:1, and the remainder siloxane units based on the total moles of repeat units in the poly(carbonate-siloxane-arylate ester) copolymer.

### Polycarbonate polymer (PC1) - Poly(carbonate-siloxane) copolymer

The composition may comprise poly(carbonate-siloxane) copolymer, also referred to in the art as a polysiloxane-polycarbonate or a polydiorganosiloxane-carbonate. The poly(carbonate-siloxane) copolymer is free of arylate ester unit thereby rendering poly(carbonate-siloxane) copolymer distinct from the poly(carbonate-siloxane-arylate ester) copolymer.

In an aspect of the invention, the polycarbonate polymer (PC1) is the poly(carbonate-siloxane) copolymer. Accordingly, when the polycarbonate polymer (PC1) is the poly(carbonate-siloxane) copolymer, the polycarbonate polymer (PC1) is free of polycarbonate homopolymer.

The poly(carbonate-siloxane) copolymer, if present in the composition, may be present in an amount from 10.0 wt.% to 50.0 wt.%, preferably from 12.0 wt.% to 50.0 wt.%, preferably from 12.0 wt.% to 48.0 wt.%, preferably from 12.0 wt.% to 45.0 wt.%, preferably from 15.0 wt.% to 45.0 wt.%, preferably from 15.0 wt.% to 40.0 wt.%, preferably from 12.0 wt.% to 25.0 wt.%, preferably from 12.0 wt.% to 20.0 wt.%, based on the total weight of the composition. In an aspect of the invention, the composition comprises 0.0 wt.% of the poly(carbonate-siloxane) copolymer.

More preferably wherein the amount of poly(carbonate-siloxane) copolymer is from 12.0 wt.% to 48.0 wt.%, preferably from 12.0 wt.% to 40.0 wt.%, based on the total weight of the composition.

The poly(carbonate-siloxane) copolymer comprises or consists of repeat units of aromatic carbonate units and siloxane units. The poly(carbonate-siloxane) copolymer may comprise 70.0 to 98.0 wt%, preferably from 75.0 to 97.0 wt.% of aromatic carbonate units based on the total weight of the poly(carbonate-siloxane) copolymer. The poly(carbonate-siloxane) copolymer may comprise from 2.0 to 30.0 wt.%, preferably from 3.0 to 25.0 wt.% of siloxane units, based on the total weight of the poly(carbonate-siloxane) copolymer.

Preferably, the poly(carbonate-siloxane) copolymer has a silicon content of less than 3.0 wt.%, preferably less than 1.5 wt.%, preferably the silicon content is 1.0 wt.%, based on the total weight of the poly(carbonate-siloxane) copolymer.

Preferably, the poly(carbonate-siloxane) copolymer has a silicon content of greater than 0.0 wt.% and less than 3.0 wt.%, preferably greater than 0.0 and less than 1.5 wt.%, preferably the silicon content is 1.0 wt.%, based on the total weight of the poly(carbonate-siloxane) copolymer.

The poly(carbonate-siloxane) copolymer may have a Mw from 2,000 to 100,000 g/mol, preferably from 5,000 to 50,000 g/mol, preferably from 25,000 to 40,000 g/mol. Molecular weight as used herein is measured by gel permeation chromatography using a cross-linked styrene-divinyl benzene column, at a sample concentration of 1 milligram per milliliter, and as calibrated with polycarbonate standards. The poly(carbonate-siloxane) copolymer may have a polydispersity index of 2.0 to 3.0.

The repeat units derived from aromatic carbonate units and siloxane units may be identical chemical composition and formula to that constituting the poly(carbonate-siloxane-arylate ester) copolymer as described in this disclosure.

Preferably wherein the poly(carbonate-siloxane) copolymer comprises or consists of repeat units derived from:
(i) aromatic carbonate units of the formula: 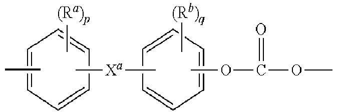 wherein R^{a} and R^{b} are each independently C₁₋₁₂ alkyl, C₁₋₁₂ alkenyl, C₃₋₈ cycloalkyl, or C₁₋₁₂ alkoxy, p and q are each independently 0 to 4, and X^{a} is a single bond, -O-, -S-, - S(O)-, -S(O)₂-, -C(O)-, a C₁₋₁₁ alkylidene of formula -C(R^{c})(R^{d})- wherein R^{c} and R^{d} are each independently hydrogen or C₁₋₁₀ alkyl, or a group of the formula -C(=R^{e})- wherein R^{e} is a divalent C₁₋₁₀ hydrocarbon group, preferably wherein X^{a} is a C₁₋₁₁ alkylidene of formula - C(R^{c})(R^{d})- wherein R^{c} and R^{d} are each independently C₁₋₆ alkyl, preferably wherein the aromatic carbonate units are derived from bisphenol A carbonate; and
(ii) siloxane units are selected from the formula: 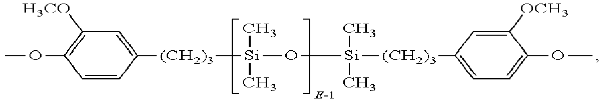 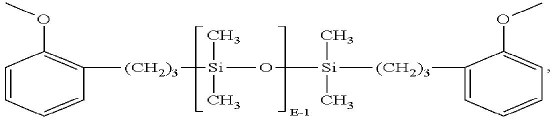 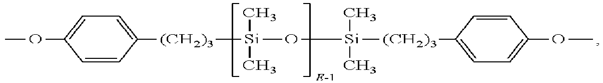 and any combination thereof, wherein 'E' has an average value from 2.0 to 200.0.

Preferably, the poly(carbonate-siloxane) copolymer comprises or consists of repeat units derived from bisphenol A (BPA) carbonate repeat units and dimethyl siloxane units.

For example, the poly(carbonate-siloxane) copolymer may be represented by the formula (25), where 'x' is an integer 1 to 100, or 5 to 85, or 10 to 70, or 15 to 65, or 40 to 60; y is an integer 10 to 30, and z is an integer 450 to 600.

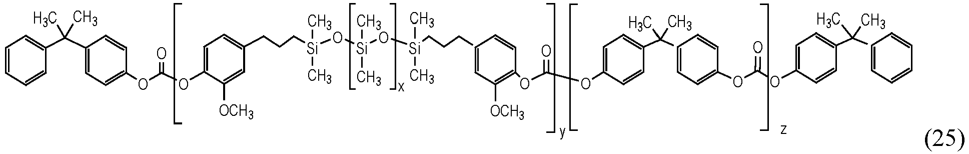

### Polycarbonate polymer (PC1) - Polycarbonate homopolymer

In an aspect of the invention, the polycarbonate polymer (PC1) is the polycarbonate homopolymer. Accordingly, when the polycarbonate polymer (PC1) is the polycarbonate homopolymer, the polycarbonate polymer (PC1) is free of poly(carbonate-siloxane) copolymer.

The polycarbonate homopolymer, if present in the composition, may be present in an amount from 5.0 wt.% to 20.0 wt.%, preferably from 5.0 wt.% to 18.0 wt.%, preferably from 5.0 wt.% to 15.0 wt.%, preferably from 10.0 wt.% to 15.0 wt.%, preferably from 12.0 wt.% to 18.0 wt.%, preferably from 12.0 wt.% to 15.0 wt.%, based on the total weight of the composition.

Preferably, wherein the amount of polycarbonate homopolymer present is from 10.0 wt.% to 18.0 wt.%, preferably from 10.0 wt.% to 15.0 wt.%, based on the total weight of the composition.

The polycarbonate homopolymer may be selected from linear polycarbonate homopolymer or branched polycarbonate homopolymer.

Preferably, wherein the polycarbonate homopolymer is a linear polycarbonate homopolymer comprising or consisting of aromatic carbonate repeat units of the formula: 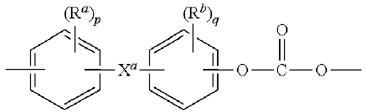 wherein R^{a} and R^{b} are each independently a C₁₋₁₂ alkyl group, C₁₋₁₂ alkenyl, C₃₋₈ cycloalkyl, or C₁₋₁₂ alkoxy, 'p' and 'q' are each independently integers from 0 to 4, and X^{a} is a single bond, -O-, -S-, -S(O)-, -S(O)₂-, -C(O)-, a C₁₋₁₁ alkylidene of formula - C(R^{c})(R^{d})- wherein R^{c} and R^{d} are each independently hydrogen or C₁₋₁₀ alkyl, or a group of the formula -C(=R^{e})- wherein R^{e} is a divalent C₁₋₁₀ hydrocarbon group.

Preferably wherein X^{a} is a C₁₋₁₁ alkylidene of formula -C(R^{c})(R^{d})- wherein R^{c} and R^{d} are each independently C₁₋₆ alkyl. Preferably wherein the linear polycarbonate homopolymer consists of repeat units derived from bisphenol A carbonate.

The polycarbonate homopolymer may have a weight average molecular weight (Mw) of 10,000 to 50,000 g/mol. Molecular weight as used herein is measured by gel permeation chromatography using a crosslinked styrene-divinyl benzene column, at a sample concentration of 1 milligram per milliliter, and as calibrated with polycarbonate standards.

The branched polycarbonate homopolymer may comprise or consists of repeat units derived from aromatic carbonate units and units derived from a branching agent. The repeat aromatic carbonate units may have the formula: 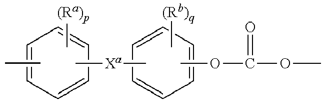 wherein R^{a} and R^{b} are each independently C₁₋₁₂ alkyl, C₁₋₁₂ alkenyl, C₃₋₈ cycloalkyl, or C₁₋₁₂ alkoxy, p and q are each independently 0 to 4, and X^{a} is a bridging group between the two arylene groups, and is a single bond, -O-, -S-, -S(O)-, -S(O)₂-, -C(O)-, a C₁₋₁₁ alkylidene of the formula -C(R^{c})(R^{d})- wherein R^{c} and R^{d} are each independently hydrogen or C₁₋₁₀ alkyl, or a group of the formula -C(=R°)- wherein R^{e} is a divalent C₁₋₁₀ hydrocarbon group.

The branching agent may comprise trimellitic trichloride, 1,1,1-tris(4-hydroxyphenyl)ethane or a combination of trimellitic trichloride and 1,1,1-tris(4-hydroxyphenyl)ethane. The branching agent may be present in an amount of greater than or equal to 0.2 mole %, based on the total moles of the branched polycarbonate.

### Brominated polycarbonate

The composition comprises a brominated polycarbonate. For example, a brominated polycarbonate may be of formula (2), and include at least one R^{h} that is bromine, a bromine-substituted C₁₋₁₀ alkyl, or a bromine-substituted C₆₋₁₀ aryl. Alternatively, a brominated polycarbonate of formula (3), may include at least one R^{a} or R^{b} that is bromine.

Preferably, the brominated polycarbonate comprises or consists of repeat units derived from (i) brominated aromatic carbonate repeat units derived from 2,2',6,6'-tetrabromo-4,4'-isopropylidenediphenol; and (ii) aromatic carbonate repeat units derived from bisphenol A.

Bromine repeat units of the brominated polycarbonate may be present in an amount of at least 5.0 wt%, preferably from 5.0 to 45.0 wt%, preferably from 10.0 to 35.0 wt%, based on the total weight of the brominated polycarbonate.

The brominated polycarbonate may be present in an amount from 10.0 wt.% to 45.0 wt.%, preferably from 15.0 wt.% to 40.0 wt.%, preferably from, 25.0 wt.% to 40.0 wt.% preferably from 20.0 wt.% to 40.0 wt.%, preferably from 25.0 wt.% to 40.0 wt.%, preferably from 25.0 wt.% to 35.0 wt.%, based on the total weight of the composition.

### Glass fiber

The composition may comprise a plurality of glass fibers. The glass fibers may be flat or round fibers. The flat glass fibers can have an elliptical cross-sectional area, while round fibers have a circular cross-sectional area, where the cross-sectional areas are measured perpendicular to the longitudinal axis of the fiber. The glass fibers may be manufactured from "E-glass," "A-glass," "C-glass," "D-glass," "R-glass," "S-glass," as well as E-glass derivatives that are fluorine-free and/or boron-free. The glass fibers can have a diameter of 3 to 35 micrometers. The glass fibers can have a diameter of 3 to 25 micrometers, or 4 to 20 micrometers, or 8 to 15 micrometers. The glass fibers can comprise woven or non-woven fibers, for example, forming a reinforcing layer. The glass fibers may comprise chopped fibers. The chopped fibers can have a length of 0.5 millimeters (mm) to 2 centimeters (cm), or 1 mm to 1 cm. The glass fibers may be non-bonding or bonding. Examples of bonding glass fibers are T-120, commercially available from Nippon Electric Glass Co., Ltd.

The glass fiber may be present in an amount from 12.0 wt.% to 20.0 wt.%, preferably from 12.0 wt.% to 18.0 wt.%, based on the total weight of the composition.

### Additives

An additive components may be used, comprising one or more additives selected to impart a desired property. The additive composition or individual additives may be mixed at a suitable time during the mixing of the components for forming the composition.

The additive components may include an anti-oxidant, impact modifier, flow modifier, filler (e.g., a particulate polytetrafluoroethylene (PTFE), glass particles (e.g., other than fibers, for example, spheres), carbon, mineral, or metal), reinforcing agent (e.g., other than glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, an additional flame retardant, anti-drip agent (e.g., a PTFE-encapsulated styreneacrylonitrile copolymer (TSAN)), or a combination thereof.

The composition may include a combination of pigments, for example, titanium dioxide, carbon black, and chrome titanate. In general, the additives are used in the amounts generally known to be effective.

For example, the total amount of the additive components (other than any impact modifier or filler) may be from 0.0 to 5.0 wt.%, preferably from 0.001 to 2.0 wt%, preferably from 0.01 to 1.0 wt%, each based on the total weight of the composition.

### Method of preparation

The composition may be prepared by melt mixing for example, in a batch mixer, the poly(carbonate-siloxane-arylate ester) copolymer, brominated polycarbonate, glass fiber, and the polycarbonate polymer (PC1),. The composition may be prepared by extruding the components in a twin-screw extruder to form extruded compositions. The mixed or extruded composition formed into a desired shape. The method forming is not limited and can include methods such as extruding, molding, coating, laminating, and the like.

The present invention will now be further elucidated based on the following nonlimiting examples.

### EXAMPLES

**Purpose:** Demonstrate the flame retardant effects of compositions having a formulation prepared in accordance with the present invention and compare such properties with control formulations.

**Material:** For the purposes of this example the following materials were used:

**Table 1**

| Material | Description |
|---|---|
| Poly(carbonate-siloxane-arylate ester) copolymer | FST grade (ML7673-111N) from SHPP CAS# 915977-87-6: |
| | A co-polycarbonate comprising 1 wt% of total silicon content. Poly(bisphenol A/resorcinol carbonate-resorcinol phthalate-dimethyl siloxane) having 8.0-12.0 mol% bisphenol A carbonate linkages, 8.0 to 12.0 mol% resorcinol carbonate linkages, 78 to 82 |
| | mol% resorcinol phthalate ester linkages with a ratio of isophthalate:terephthalate of 1:1, and 0.8 to 1.2 wt% of a eugenol-linked D10 dimethylsiloxane; para-cumyl phenol endcapped; glass transition temperature of 142°C, Mw = 22,500 to 26,500 g/mol. |
| (PC1) - Poly(carbonate-siloxane) copolymer | EXL grade (ML7638-111N) from SHPP CAS# 202483-49-6: |
| | Poly(bisphenol A carbonate-dimethylsiloxane) copolymer produced via interfacial polymerization, 20.0 wt% siloxane, average siloxane block length = 45 units (D45), Mw = 29,000 to 31,000 g/mol as per GPC using polycarbonate standards, PCP end-capped, polydispersity = 2 to 3; comprising 1 wt% of total silicon content. |
| (PC1) - Polycarbonate homopolymer | Polycarbonate Grade 105-111, CAS# 111211-39-3: |
| | A linear poly(bisphenol A carbonate), Mw = 30,000-31,000 g/mol per GPC using bisphenol A homopolycarbonate standards. |
| Brominated polycarbonate | A copolymer of polycarbonate derived from tetrabromobisphenol A (TBBPA) and bisphenol A (BPA) co-carbonate (about 30 mol% TBBPA) with a Mw of about 22,500 g/mol, PCP endcap. |
| Glass fibers | Chopped glass fibers having a 14 micrometer diameter |
| Antioxidant | IRGAFOS 168, phosphorous based antioxidant |

**Process for preparing samples:** The compositions used in the examples were prepared by first extruding the components in a twin-screw extruder under the processing conditions described in Table 2A to form extruded compositions. The extruded compositions were then dried and extruded into 400 mm wide sheets of different thicknesses by using a Cincinnati extruder under the processing parameters described in Table 2B.

As used herein, °C stands for degrees Celsius, rpm stands for revolutions per minute, kg/hr stands for kilograms per hour and m/min stands for meters per minute.

**Table 2A**

| Parameters | Unit | Value | | Unit | Value |
|---|---|---|---|---|---|
| Feed (Zone 0) Temp | °C | 50 | | | |
| Zone 1 Temp | °C | - | Zone 10 Temp | °C | - |
| Zone 2 Temp | °C | 200 | Zone 11 Temp | °C | - |
| Zone 3 Temp | °C | 220 | Zone 12 Temp | °C | - |
| Zone 4 Temp | °C | 250 | Die Temp | °C | 250 |
| Zone 5 Temp | °C | 250 | Screw speed | rpm | 450 |
| Zone 6 Temp | °C | 250 | Throughput | kg/hr | max. 35 |
| Zone 7 Temp | °C | 250 | Torque | % | - |
| Zone 8 Temp | °C | 250 | Vacuum 1 | bar | 0.7 |
| Zone 9 Temp | °C | 250 | Vacuum 2 | bar | |

**Table 2B**

| **Table 2B** | | |
|---|---|---|
| Parameters | Unit | Values |
| Zone 1 temp | °C | 190 |
| Zone 2 temp | °C | 200 |
| Zone 3 temp | °C | 210 |
| Zone 4 temp | °C | 225 |
| Zone 5 temp | °C | 235 |
| Zone 6 temp | °C | 240 |
| Zone 7 temp | °C | 250 |
| Zone 8 temp | °C | 260 |
| Roll 1 | °C | 120 |
| Roll 2 | °C | 125 |
| Roll 2 | °C | 130 |
| Roll speed | m/min | 0.4 |

**Test standards:** The flame resistance characterization of Examples 1 to 6 was performed according to EN45545-2 and included heat release (ISO 5660-1), smoke density (ISO 5659-2), and flame spread (ISO 5658-2) measurements. The requirements needed in order to receive a passing rating according to R1-HL2 and R1-HL3 are listed in Table 3. The R1-HL2 and R1-HL3 requirements were measured using samples having a 3.0 mm thicknesses.

**Table 3**

| Measurement | Parameter | Test Method | HL2 | HL3 |
|---|---|---|---|---|
| Heat Release | MAHRE | ISO 5660-1 on a 3 millimeter thick plaque at 50 kW/m² | less than or equal to 90 kW/m² | less than or equal to 60 kW/m² |
| Smoke Density | Ds4 | ISO 5659-2 on a 3 mm thick plaque at 50 kW/m² | less than or equal to 300 | less than or equal to 150 |
| | VOF4 | ISO 5659-2 on a 3 mm thick plaque at 50 kW/m² | less than or equal to 600 | less than or equal to 300 |
| Critical Heat Flux at Extinguishment | CFE | ISO 5658-2 | greater than or equal to 20 kW/m² | greater than or equal to 20 kW/m² |

Various compositions were prepared via a design of experiment (DOE) approach by using a mixture design space and analyzed for flame ratings according to EN45545-2 norm.

**Results and Conclusion:** Table 4 provides the relative amount of the components for the samples.

**Table 4**

| Sample No. | Poly(carbonate-siloxane-arylate ester) copolymer (wt.%) | Poly(carbonate-siloxane) copolymer (wt.%) | Brominated polycarbonate (wt.%) | Polycarbonate homopolymer (wt.%) | Glass fiber (wt.%) |
|---|---|---|---|---|---|
| IE1 (inventive) | 40.0 | 15.0 | 30.0 | 0 | 15.0 |
| IE2 (inventive) | 10.0 | 45.0 | 30.0 | 0 | 15.0 |
| IE3 (inventive) | 40.0 | 15.0 | 20.0 | 10.0 | 15.0 |
| IE4 (inventive) | 35.0 | 0 | 35.0 | 15.0 | 15.0 |
| CE1 (comparative) | 26.0 | 32.0 | 21.0 | 11.0 | 10.0 |
| CE2 | 35.0 | 45.0 | 15.0 | 0 | 5.0 |
| (comparative) | | | | | |

Table 5 provides the relative amount of the components for the samples.

**Table 5**

| | Heat release / kW/m² | Ds4 | VOF4 | CE4 | Test Compliant with |
|---|---|---|---|---|---|
| IE1 | 59.4 | 250 | 448 | 23.1 | HL2 |
| IE2 | 53.3 | 197 | 388 | 22.7 | HL2 |
| IE3 | 68.8 | 272 | 544 | 20.5 | HL2 |
| IE4 | 41.9 | 88 | 139 | 27.7 | HL3 |
| CE1 | 72.3 | 176 | 416 | 19.8 | Does not pass |
| CE2 | 100.5 | 359 | 794 | 18 | Does not pass |

As is evident from the data provided under Table 5, that the samples prepared in accordance with the present invention pass either the HL2 or the HL3 flame retardant test. Accordingly, articles prepared from these formulations can be used in mass transportation systems which require strict adherence to these test standards.

Further, the inventors found that even when the formulations used identical components but blended in different proportions, the required flame retardant performance was not obtained. For example, inventive sample IE3 and comparative sample CE1 had identical components but at different proportion. However IE3 sample passed the HL2 flame retardant test while the sample CE1 did not. This is surprising, as although poly(carbonate-siloxane-arylate ester) copolymer used in the examples have certain degree of flame retardant properties it is evident that only when the ingredients were formulated in the proportion as prescribed under the present invention, the desired flame retardant effects under HL2 or HL3 criteria were achieved even without the need of adding additional flame retardant additives.

## Claims

1. A composition comprising, based on the total weight of the composition:
(a) from 5.0 wt.% to 55.0 wt.% of at least one poly(carbonate-siloxane-arylate ester) copolymer;
(b) from 10.0 wt.% to 45.0 wt.% of at least one brominated polycarbonate;
(c) from 12.0 wt.% to 20.0 wt.% of glass fiber; and
(d) at least one polycarbonate polymer (PC1) selected from the group consisting of:
i. a poly(carbonate-siloxane) copolymer, wherein if selected, is present in an amount from 10.0 wt.% to 50.0 wt.%;
ii. a polycarbonate homopolymer, wherein if selected, is present in an amount from 5.0 wt.% to 20.0 wt.%; and
iii. a combination of i) and ii);
wherein the at least one poly(carbonate-siloxane) copolymer is free of repeat units derived from arylate ester; and wherein the polycarbonate homopolymer is free of bromine.

2. The composition of claim 1, wherein based on the total weight of the composition:
(a) the amount of poly(carbonate-siloxane-arylate ester) copolymer present is from 10.0 wt.% to 45.0 wt.%, preferably from 20.0 wt.% to 45.0 wt.%, preferably from 25.0 wt.% to 40.0 wt.%, preferably 30.0 wt.% to 40.0 wt.%;
(b) the amount of brominated polycarbonate present is from 20.0 wt.% to 40.0 wt.%, preferably from 25.0 wt.% to 40.0 wt.%, preferably from 25.0 wt.% to 35.0 wt.%; and
(c) the amount of glass fiber present is from 12.0 wt.% to 18.0 wt.% of the glass fiber.

3. The composition according to any one of claims 1-2, wherein based on the total weight of the composition:
• the amount of poly(carbonate-siloxane) copolymer present is from 12.0 wt.% to 45.0 wt.%, preferably from 12.0 wt.% to 25.0 wt.%, preferably from 12.0 wt.% to 20.0 wt.%; and/or
• the amount of polycarbonate homopolymer present is from 5.0 wt.% to 18.0 wt.%, preferably from 12.0 wt.% to 18.0 wt.%.

4. The composition according to any one of claims 1-3, wherein the poly(carbonate-siloxane-arylate ester) copolymer has a silicon content of less than 3.0 wt.%, preferably less than 1.5 wt.%, preferably the silicon content is 1.0 wt.%, based on the total weight of the poly(carbonate-siloxane-arylate ester) copolymer.

5. The composition according to any one of claims 1-4, wherein the polycarbonate polymer (PC 1) is the polycarbonate homopolymer, preferably wherein the amount of polycarbonate homopolymer present is from 10.0 wt.% to 18.0 wt.%, based on the total weight of the composition.

6. The composition according to claim 5, wherein the polycarbonate homopolymer is selected from linear polycarbonate homopolymer or branched polycarbonate homopolymer, preferably wherein the polycarbonate homopolymer is a linear polycarbonate homopolymer comprising or consisting of aromatic carbonate repeat units of the formula: 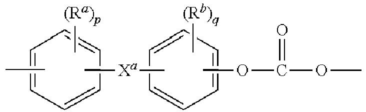 wherein
R^{a} and R^{b} are each independently a C₁₋₁₂ alkyl group, C₁₋₁₂ alkenyl, C₃₋₈ cycloalkyl, or C₁₋₁₂alkoxy, p and q are each independently integers from 0 to 4, and X^{a} is a single bond, -O-, -S-, -S(O)-, -S(O)₂-, -C(O)-, a C₁₋₁₁ alkylidene of formula -C(R^{c})(R^{d})- wherein R^{c} and R^{d} are each independently hydrogen or C₁₋₁₀ alkyl, or a group of the formula -C(=R^{e})-wherein R^{e} is a divalent C₁₋₁₀ hydrocarbon group, preferably wherein X^{a} is a C₁₋₁₁ alkylidene of formula -C(R^{c})(R^{d})- wherein R^{c} and R^{d} are each independently C₁₋₆ alkyl, preferably wherein the linear polycarbonate homopolymer consists of repeat units derived from bisphenol A carbonate.

7. The composition according to any one of claims 1-4, wherein the polycarbonate polymer (PC1) is the poly(carbonate-siloxane) copolymer, preferably wherein the amount of poly(carbonate-siloxane) copolymer present is from 12.0 wt.% to 48.0 wt.%, preferably from 12.0 wt.% to 45.0 wt.%, preferably from 12.0 wt.% to 40.0 wt.%, based on the total weight of the composition.

8. The composition according to claim 7, wherein the poly(carbonate-siloxane) copolymer comprises or consists of repeat units derived from:
(i) aromatic carbonate units of the formula: 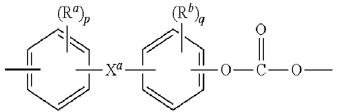 wherein
R^{a} and R^{b} are each independently a C₁₋₁₂ alkyl group, C₁₋₁₂ alkenyl, C₃₋₈ cycloalkyl, or C₁₋₁₂alkoxy, p and q are each independently integers from 0 to 4, and X^{a} is a single bond, -O-, -S-, - S(O)-, -S(O)₂-, -C(O)-, a C₁₋₁₁ alkylidene of formula -C(R^{c})(R^{d})- wherein R^{c} and R^{d} are each independently hydrogen or C₁₋₁₀ alkyl, or a group of the formula -C(=R^{e})- wherein R^{e} is a divalent C₁₋₁₀ hydrocarbon group, preferably wherein X^{a} is a C₁₋₁₁ alkylidene of formula - C(R^{c})(R^{d})- wherein R^{c} and R^{d} are each independently C₁₋₆ alkyl, preferably wherein the aromatic carbonate units are derived from bisphenol A carbonate; and
(ii) siloxane units selected from the formula: 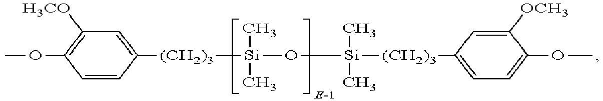 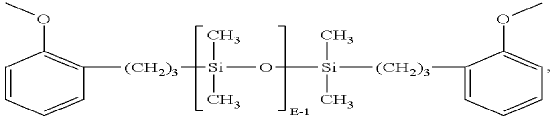 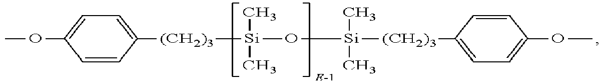 and any combination thereof, wherein 'E' has an average value from 2.0 to 200.0.

9. The composition according to any one of claims 1-8, wherein the poly(carbonate-siloxane-arylate ester) copolymer comprises or consists of repeat units derived from (i) arylate ester units, preferably wherein the arylate ester units are isophthalate-terephthalate-resorcinol (ITR) ester units; (ii) aromatic carbonate units, preferably wherein the aromatic carbonate units are selected from bisphenol A carbonate units, resorcinol carbonate units, and combinations thereof; and (iii) siloxane units selected from the formula: 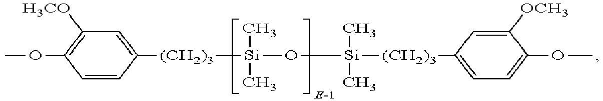 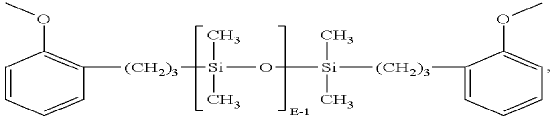 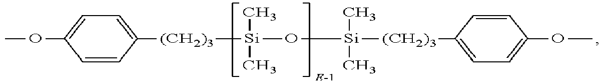 and any combination thereof, wherein 'E' has an average value from 2.0 to 200.0.

10. The composition according to any one of claims 1-9, wherein the brominated polycarbonate comprises or consists of repeat units derived from (i) brominated aromatic carbonate repeat units derived from 2,2',6,6'-tetrabromo-4,4'-isopropylidenediphenol; and (ii) aromatic carbonate repeat units derived from bisphenol A.

11. The composition according to any of claims 1-10, wherein the composition comprises less than 0.5 wt.% based on the total weight of the composition, of additional flame retardant compounds, preferably wherein the additional flame retardant compounds are selected from organic phosphates, polyetherimide (PEI), polyphenylene ether (PPE), aromatic organophosphorus compounds having two or more phosphorus-containing groups, organic compounds containing phosphorus-nitrogen bonds, halogenated flame retardants, inorganic flame retardants and combinations thereof.

12. The composition according to any one claims 1-11, wherein the composition has or is selected to have:
• a smoke density after 4 minutes (Ds4) of less than or equal to 300.0 determined according to ISO 5659-2 on a 3.0 millimeter thick plaque at 50.0 kW/m²;
• a smoke density (VOF4) of less than or equal to 600.0 determined in accordance with ISO 5659-2 on a 3.0 millimeter thick plaque at 50.0 kW/m²;
• a maximum average heat release (MAHRE) of less than or equal to 90.0 kW/m² measured according to ISO 5660-1 on a 3.0 millimeter thick plaque at 50.0 kW/m²; and
• a critical heat flux at extinguishment (CFE) of greater than or equal to 20.0 kW/m² determined in accordance with ISO 5658-2.

13. The composition according to claim 1, wherein based on the total weight of the composition
• the poly(carbonate-siloxane-arylate ester) copolymer is present in an amount from 20.0 wt.% to 40.0 wt.%;
• the brominated polycarbonate is present in an amount from 20.0 wt.% to 40.0 wt.%;
• the glass fiber is present in an amount from 12.0 wt.% to 18.0 wt.%; and
• the polycarbonate homopolymer is a linear polycarbonate homopolymer, present in an amount from 12.0 wt.% to 18.0 wt.%:
preferably wherein the composition has or selected to have:
(i) a smoke density after 4 minutes (Ds4) of less than or equal to 150.0 determined according to ISO 5659-2 on a 3 millimeter thick plaque at 50.0 kW/m²;
(ii) a smoke density (VOF4) of less than or equal to 300.0 determined in accordance with ISO 5659-2 on a 3.0 millimeter thick plaque at 50.0 kW/m²;
(iii) a maximum average heat release (MAHRE) of less than or equal to 60.0 kW/m² measured according to ISO 5660-1 on a 3 millimeter thick plaque at 50.0 kW/m²; and
(iv) a critical heat flux at extinguishment (CFE) of greater than or equal to 20.0 kW/m² determined in accordance with ISO 5658-2.

14. An article comprising the composition according to any one of claims 1-13, preferably wherein the article is suitable to be used in mass transportation systems, preferably wherein the article is at least any one of a railway component, aerospace component or an automobile component.

15. Use of the composition according to any one of claims 1-13 for improving the flame retardant properties of an article used in mass transportation systems.

## Patentansprüche

1. Zusammensetzung umfassend, basierend auf dem Gesamtgewicht der Zusammensetzung:
(a) von 5,0 Gew.-% bis 55,0 Gew.-% mindestens eines Poly(carbonat-Siloxan-Arylatester)-Copolymers;
(b) von 10,0 Gew.-% bis 45,0 Gew.-% mindestens eines bromierten Polycarbonats;
(c) von 12,0 Gew.-% bis 20,0 Gew.-% Glasfaser; und
(d) mindestens ein Polycarbonat-Polymer (PC1), ausgewählt aus der Gruppe bestehend aus:
i. einem Poly(carbonat-Siloxan)-Copolymer, wobei, falls ausgewählt, in einer Menge von 10,0 Gew.-% bis 50,0 Gew.-% vorhanden ist;
ii. einem Polycarbonat-Homopolymer, wobei, falls ausgewählt, in einer Menge von 5,0 Gew.-% bis 20,0 Gew.-% vorhanden ist; und
iii. einer Kombination aus i) und ii);
wobei das mindestens eine Poly(carbonat-Siloxan)-Copolymer frei von Wiederholungseinheiten ist, die von Arylatester abgeleitet sind; und wobei das Polycarbonat-Homopolymer bromfrei ist.

2. Zusammensetzung nach Anspruch 1, wobei, basierend auf dem Gesamtgewicht der Zusammensetzung:
(a) die Menge des vorhandenen Poly(carbonat-Siloxan-Arylatester)-Copolymers von 10,0 Gew.-% bis 45,0 Gew.-%, vorzugsweise von 20,0 Gew.-% bis 45,0 Gew.-%, vorzugsweise von 25,0 Gew.-% bis 40,0 Gew.-%, vorzugsweise 30,0 Gew.-% bis 40,0 Gew.-% beträgt;
(b) die Menge des vorhandenen bromierten Polycarbonats von 20,0 Gew.-% bis 40,0 Gew.-%, vorzugsweise von 25,0 Gew.-% bis 40,0 Gew.-%, vorzugsweise von 25,0 Gew.-% bis 35,0 Gew.-% beträgt; und
(c) die Menge der vorhandenen Glasfaser von 12,0 Gew.-% bis 18,0 Gew.-% der Glasfaser beträgt.

3. Zusammensetzung nach einem der Ansprüche 1-2, wobei, basierend auf dem Gesamtgewicht der Zusammensetzung:
- die Menge des vorhandenen Poly(carbonat-Siloxan)-Copolymers von 12,0 Gew.-% bis 45,0 Gew.-%, vorzugsweise von 12,0 Gew.-% bis 25,0 Gew.-%, vorzugsweise von 12,0 Gew.-% bis 20,0 Gew.-% beträgt; und/oder
- die Menge des vorhandenen Polycarbonat-Homopolymers von 5,0 Gew.-% bis 18,0 Gew.-%, vorzugsweise von 12,0 Gew.-% bis 18,0 Gew.-% beträgt.

4. Zusammensetzung nach einem der Ansprüche 1 bis 3, wobei das Poly(carbonat-Siloxan-Arylatester)-Copolymer einen Siliciumgehalt von weniger als 3,0 Gew.-%, vorzugsweise weniger als 1,5 Gew.-% aufweist, wobei der Siliciumgehalt vorzugsweise 1,0 Gew.-%, basierend auf dem Gesamtgewicht des Poly(carbonat-Siloxan-Arylatester)-Copolymers, beträgt.

5. Zusammensetzung nach einem der Ansprüche 1 bis 4, wobei das Polycarbonat-Polymer (PC1) das Polycarbonat-Homopolymer ist, wobei die Menge des vorhandenem Polycarbonat-Homopolymers vorzugsweise von 10,0 Gew.-% bis 18,0 Gew.-%, basierend auf dem Gesamtgewicht der Zusammensetzung, beträgt.

6. Zusammensetzung nach Anspruch 5, wobei das Polycarbonat-Homopolymer ausgewählt ist aus linearem Polycarbonat-Homopolymer oder verzweigtem Polycarbonat-Homopolymer, wobei das Polycarbonat-Homopolymer vorzugsweise ein lineares Polycarbonat-Homopolymer ist, das aromatische Carbonat-Wiederholungseinheiten der Formel umfasst oder daraus besteht: 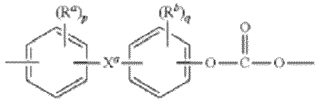 wobei
R^{a} und R^{b} jeweils unabhängig eine C₁₋₁₂-Alkylgruppe, C₁₋₁₂-Alkenyl, C₃₋₈-Cycloalkyl oder C₁₋₁₂-Alkoxy sind, p und q jeweils unabhängig ganze Zahlen von 0 bis 4 sind, und X^{a} eine Einfachbindung, -O-, -S-, -S(O)-, -S(O)₂-, -C(O)-, ein C₁₋₁₁- Alkyliden der Formel -C(R^{c})(R^{d})- ist, wobei R^{c} und R^{d} jeweils unabhängig Wasserstoff oder C₁₋₁₀-Alkyl oder eine Gruppe der Formel -C(=R^{e})- sind, wobei R^{e} eine zweiwertige C₁₋₁₀-Kohlenwasserstoffgruppe ist, wobei X^{a} vorzugsweise ein C₁₋₁₁-Alkyliden der Formel - C(R^{c})(R^{d})- ist, wobei R^{c} und R^{d} jeweils unabhängig C₁₋₆-Alkyl sind, wobei das lineare Polycarbonat-Homopolymer vorzugsweise aus Wiederholungseinheiten besteht, die von Bisphenol-A-Carbonat abgeleitet sind.

7. Zusammensetzung nach einem der Ansprüche 1 bis 4, wobei das Polycarbonat-Polymer (PC1) das Poly(carbonat-Siloxan)-Copolymer ist, wobei die Menge des vorhandenen Poly(carbonat-Siloxan)-Copolymers vorzugsweise von 12,0 Gew.-% bis 48,0 Gew.-%, vorzugsweise von 12,0 Gew.-% bis 45,0 Gew.-%, vorzugsweise von 12,0 Gew.-% bis 40,0 Gew.-%, basierend auf dem Gesamtgewicht der Zusammensetzung, beträgt.

8. Zusammensetzung nach Anspruch 7, wobei das Poly(carbonat-Siloxan)-Copolymer Wiederholungseinheiten umfasst oder daraus besteht, die von Folgendem abgeleitet sind:
(i) aromatischen Carbonateinheiten der Formel: 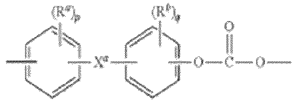 wobei
R^{a} und R^{b} jeweils unabhängig eine C₁₋₁₂-Alkylgruppe, C₁₋₁₂-Alkenyl, C₃₋₈-Cycloalkyl oder C₁₋₁₂-Alkoxy sind, p und q jeweils unabhängig ganze Zahlen von 0 bis 4 sind, und X^{a} eine Einfachbindung, -O-, -S-, - S(O)-, -S(O)₂-, -C(O)-, ein C₁₋₁₁ -Alkyliden der Formel -C(R^{c})(R^{d})- ist, wobei R^{c} und R^{d} jeweils unabhängig Wasserstoff oder C₁₋₁₀-Alkyl oder eine Gruppe der Formel -C(=R^{e})- sind, wobei R^{e} eine zweiwertige C₁₋₁₀-Kohlenwasserstoffgruppe ist, wobei X^{a} vorzugsweise ein C₁₋₁₁-Alkyliden der Formel - C(R^{c})(R^{d})- ist, wobei R^{c} und R^{d} jeweils unabhängig C₁₋₆-Alkyl sind, wobei die aromatischen Carbonateinheiten vorzugsweise von Bisphenol-A-Carbonat abgeleitet sind; und
(ii) Siloxaneinheiten, ausgewählt aus der Formel: 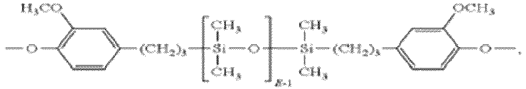 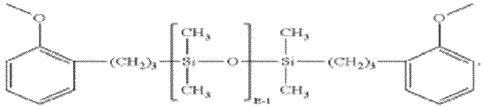 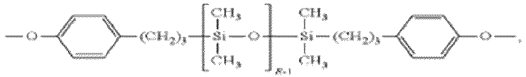 und einer beliebigen Kombination davon, wobei 'E' einen Durchschnittswert von 2,0 bis 200,0 aufweist.

9. Zusammensetzung nach einem der Ansprüche 1 bis 8, wobei das Poly(carbonat-Siloxan-Arylatester)-Copolymer Wiederholungseinheiten umfasst oder daraus besteht, die abgeleitet sind von (i) Arylatestereinheiten, wobei die Arylatestereinheiten vorzugsweise Isophthalat-Terephthalat-Resorcinol (ITR)-Estereinheiten sind; (ii) aromatischen Carbonateinheiten, wobei die aromatischen Carbonateinheiten vorzugsweise aus Bisphenol-A-Carbonateinheiten, Resorcinol-Carbonateinheiten und Kombinationen davon ausgewählt sind; und (iii) Siloxaneinheiten, ausgewählt aus der Formel: 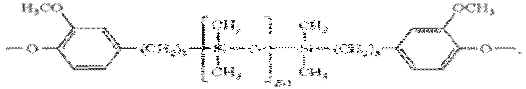 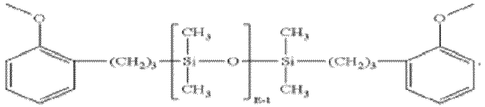 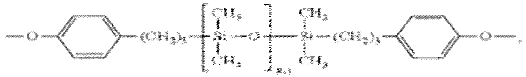 und einer beliebigen Kombination davon, wobei 'E' einen Durchschnittswert von 2,0 bis 200,0 aufweist.

10. Zusammensetzung nach einem der Ansprüche 1 bis 9, wobei das bromierte Polycarbonat Wiederholungseinheiten umfasst oder daraus besteht, die abgeleitet sind von (i) bromierten aromatischen Carbonat-Wiederholungseinheiten, die von 2,2',6,6'-Tetrabrom-4,4'-isopropylidendiphenol abgeleitet sind; und (ii) aromatischen Carbonat-Wiederholungseinheiten, die von Bisphenol A abgeleitet sind.

11. Zusammensetzung nach einem der Ansprüche 1-10, wobei die Zusammensetzung weniger als 0,5 Gew.-%, basierend auf dem Gesamtgewicht der Zusammensetzung, an zusätzlichen Flammschutzverbindungen umfasst, wobei die zusätzlichen Flammschutzverbindungen vorzugsweise ausgewählt sind aus organischen Phosphaten, Polyetherimid (PEI), Polyphenylenether (PPE), aromatischen Organophosphorverbindungen, die zwei oder mehr phosphorhaltige Gruppen aufweisen, organischen Verbindungen, die Phosphor-Stickstoff-Bindungen enthalten, halogenierten Flammschutzmitteln, anorganischen Flammschutzmitteln und Kombinationen davon.

12. Zusammensetzung nach einem der Ansprüche 1-11, wobei die Zusammensetzung Folgendes aufweist oder so ausgewählt ist, dass sie Folgendes aufweist:
- eine Rauchdichte nach 4 Minuten (Ds4) von weniger als oder gleich 300,0, bestimmt nach ISO 5659-2 auf einer 3,0 Millimeter dicken Platte bei 50,0 kW/m²;
- eine Rauchdichte (VOF4) von weniger als oder gleich 600,0, bestimmt nach ISO 5659-2 auf einer 3,0 Millimeter dicken Platte bei 50,0 kW/m²;
- eine maximale durchschnittliche Wärmefreisetzung (MAHRE) von weniger als oder gleich 90,0 kW/m², gemessen nach ISO 5660-1 auf einer 3,0 Millimeter dicken Platte bei 50,0 kW/m²; und
- einen kritischen Wärmestrom beim Löschen (CFE) von größer oder gleich 20,0 kW/m², bestimmt nach ISO 5658-2.

13. Zusammensetzung nach Anspruch 1, wobei basierend auf dem Gesamtgewicht der Zusammensetzung
- das Poly(carbonat-Siloxan-Arylatester)-Copolymer in einer Menge von 20,0 Gew.-% bis 40,0 Gew.-% vorhanden ist;
- das bromierte Polycarbonat in einer Menge von 20,0 Gew.-% bis 40,0 Gew.-% vorhanden ist;
- die Glasfaser in einer Menge von 12,0 Gew.-% bis 18,0 Gew.-% vorhanden ist; und
- das Polycarbonat-Homopolymer ein lineares Polycarbonat-Homopolymer ist, das in einer Menge von 12,0 Gew.-% bis 18,0 Gew.-% vorhanden ist:
wobei die Zusammensetzung vorzugsweise Folgendes aufweist oder so ausgewählt ist, dass sie Folgendes aufweist:
(i) eine Rauchdichte nach 4 Minuten (Ds4) von weniger als oder gleich 150,0, bestimmt nach ISO 5659-2 auf einer 3 Millimeter dicken Platte bei 50,0 kW/m²;
(ii) eine Rauchdichte (VOF4) von weniger als oder gleich 300,0, bestimmt nach ISO 5659-2 auf einer 3,0 Millimeter dicken Platte bei 50,0 kW/m²;
(iii) eine maximale durchschnittliche Wärmefreisetzung (MAHRE) von weniger als oder gleich 60,0 kW/m², gemessen nach ISO 5660-1 auf einer 3 Millimeter dicken Platte bei 50,0 kW/m²; und
(iv) einen kritischen Wärmestrom beim Löschen (CFE) von größer oder gleich 20,0 kW/m², bestimmt nach ISO 5658-2.

14. Artikel, umfassend die Zusammensetzung nach einem der Ansprüche 1-13, wobei der Artikel vorzugsweise geeignet ist, um in Massentransportsystemen verwendet zu werden, wobei der Artikel vorzugsweise mindestens eines von einem Eisenbahnbauteil, einem Luft- und Raumfahrzeugbauteil oder einem Kraftfahrzeugbauteil ist.

15. Verwendung der Zusammensetzung nach einem der Ansprüche 1-13 zur Verbesserung der flammhemmenden Eigenschaften eines Artikels, der in Massentransportsystemen verwendet wird.

## Revendications

1. Composition comprenant, sur la base du poids total de la composition :
(a) de 5,0 % en poids à 55,0 % en poids d'au moins un copolymère poly(carbonate-siloxane-arylate ester) ;
(b) de 10,0 % en poids à 45,0 % en poids d'au moins un polycarbonate bromé ;
(c) de 12,0 % en poids à 20,0 % en poids de fibre de verre ; et
(d) au moins un polymère de polycarbonate (PC1) sélectionné dans le groupe consistant en :
i. un copolymère poly(carbonate-siloxane), dans lequel, s'il est sélectionné, est présent en une quantité de 10,0 % en poids à 50,0 % en poids ;
ii. un homopolymère de polycarbonate, dans lequel, s'il est sélectionné, est présent en une quantité de 5,0 % en poids à 20,0 % en poids ; et
iii. une combinaison de i) et ii) ;
dans laquelle le au moins un copolymère de poly(carbonate-siloxane) est exempt d'unités répétitives dérivées d'ester d'arylate ; et dans laquelle l'homopolymère de polycarbonate est exempt de brome.

2. Composition selon la revendication 1, dans laquelle, sur la base du poids total de la composition :
(a) la quantité de copolymère poly(carbonate-siloxane-arylate ester) présente est de 10,0 % en poids à 45,0 % en poids, de préférence de 20,0 % en poids à 45,0 % en poids, de préférence de 25,0 % en poids à 40,0 % en poids, de préférence de 30,0 % en poids à 40,0 % en poids ;
(b) la quantité de polycarbonate bromé présente est de 20,0 % en poids à 40,0 % en poids, de préférence de 25,0 % en poids à 40,0 % en poids, de préférence de 25,0 % en poids à 35,0 % en poids ; et
(c) la quantité de fibre de verre présente est de 12,0 % en poids à 18,0 % en poids de la fibre de verre.

3. Composition selon l'une quelconque des revendications 1-2, dans laquelle, sur la base du poids total de la composition :
- la quantité de copolymère poly(carbonate-siloxane) présente est de 12,0 % en poids à 45,0 % en poids, de préférence de 12,0 % en poids à 25,0 % en poids, de préférence de 12,0 % en poids à 20,0 % en poids ; et/ou
- la quantité d'homopolymère de polycarbonate présente est de 5,0 % en poids à 18,0 % en poids, de préférence de 12,0 % en poids à 18,0 % en poids.

4. Composition selon l'une quelconque des revendications 1-3, dans laquelle le copolymère poly(carbonate-siloxane-arylate ester) présente une teneur en silicium inférieure à 3,0 % en poids, de préférence inférieure à 1,5 % en poids, de préférence la teneur en silicium est de 1,0 % en poids, sur la base du poids total du copolymère poly(carbonate-siloxane-arylate ester).

5. Composition selon l'une quelconque des revendications 1-4, dans laquelle le polymère de polycarbonate (PC1) est l'homopolymère de polycarbonate, de préférence dans laquelle la quantité d'homopolymère de polycarbonate présente est de 10,0 % en poids à 18,0 % en poids, sur la base du poids total de la composition.

6. Composition selon la revendication 5, dans laquelle l'homopolymère de polycarbonate est choisi parmi un homopolymère de polycarbonate linéaire ou un homopolymère de polycarbonate ramifié, de préférence dans laquelle l'homopolymère de polycarbonate est un homopolymère de polycarbonate linéaire comprenant ou consistant en des unités répétitives de carbonate aromatique de formule : 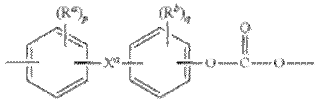 dans laquelle
R^{a} et R^{b} sont chacun indépendamment un groupe alkyle en C₁₋₁₂, un alcényle en C₁₋₁₂, un cycloalkyle en C₃₋₈ ou un alcoxy en C₁₋₁₂, p et q sont chacun indépendamment des entiers de 0 à 4, et X^{a} est une liaison simple, -O-, -S-, -S(O)-, -S(O)₂-, -C(O)-, un alkylidène en C₁₋₁₁ de formule -C(R^{c})(R^{d})- dans laquelle R^{c} et R^{d} sont chacun indépendamment un hydrogène ou un alkyle en C₁₋₁₀, ou un groupe de formule -C(=R^{e})-dans laquelle R^{e} est un groupe hydrocarboné divalent en C₁₋₁₀, de préférence dans laquelle X^{a} est un alkylidène en C₁₋₁₁ de formule -C(R^{c})(R^{d})- dans laquelle R^{c} et R^{d} sont chacun indépendamment un alkyle en C₁₋₆, de préférence dans laquelle l'homopolymère de polycarbonate linéaire consiste en des unités répétitives dérivées de carbonate de bisphénol A.

7. Composition selon l'une quelconque des revendications 1-4, dans laquelle le polymère de polycarbonate (PC1) est le copolymère poly(carbonate-siloxane), de préférence dans laquelle la quantité de copolymère poly(carbonate-siloxane) présente est de 12,0 % en poids à 48,0 % en poids, de préférence de 12,0 % en poids à 45,0 % en poids, de préférence de 12,0 % en poids à 40,0 % en poids, sur la base du poids total de la composition.

8. Composition selon la revendication 7, dans laquelle le copolymère poly(carbonate-siloxane) comprend ou consiste en des unités répétitives dérivées de :
(i) unités de carbonate aromatique de formule : 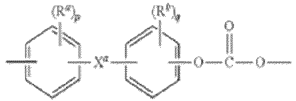 dans laquelle
R^{a} et R^{b} sont chacun indépendamment un groupe alkyle en C₁₋₁₂, un alcényle en C₁. ₁₂, un cycloalkyle en C₃₋₈ ou un alcoxy en C₁₋₁₂, p et q sont chacun indépendamment des entiers de 0 à 4, et X^{a} est une liaison simple, -O-, -S-, -S(O)-, -S(O)₂-, -C(O)-, un alkylidène en C₁₋₁₁ de formule -C(R^{c})(R^{d})- dans laquelle R^{c} et R^{d} sont chacun indépendamment un hydrogène ou un alkyle en C₁₋₁₀, ou un groupe de formule -C(=R^{e})-dans laquelle R^{e} est un groupe hydrocarboné divalent en C₁₋₁₀, de préférence dans laquelle X^{a} est un alkylidène en C₁₋₁₁ de formule -C(R^{c})(R^{d})- dans laquelle R^{c} et R^{d} sont chacun indépendamment un alkyle en C₁₋₆, de préférence dans laquelle les unités de carbonate aromatique sont dérivées du carbonate de bisphénol A ; et
(ii) unités de siloxane choisies dans la formule : 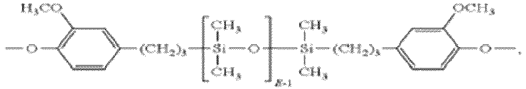 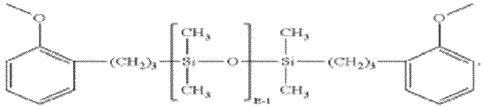 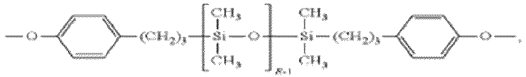 et toute combinaison de celles-ci, dans laquelle « E » présente une valeur moyenne de 2,0 à 200,0.

9. Composition selon l'une quelconque des revendications 1-8, dans laquelle le copolymère poly(carbonate-siloxane-arylate ester) comprend ou consiste en des unités répétitives dérivées (i) d'unités d'ester arylique, de préférence dans laquelle les unités d'ester arylique sont des unités d'ester isophtalate-téréphtalate-résorcinol (ITR) ; (ii) d'unités de carbonate aromatique, de préférence dans laquelle les unités de carbonate aromatique sont choisies parmi les unités de carbonate de bisphénol A, les unités de carbonate de résorcinol et leurs combinaisons ; et (iii) d'unités de siloxane choisies à partir de la formule : 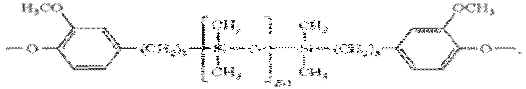 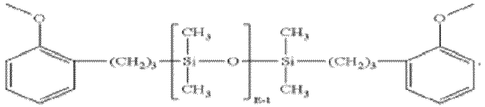 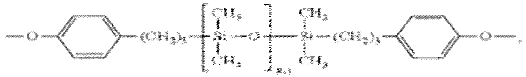 et toute combinaison de celles-ci, dans laquelle « E » présente une valeur moyenne de 2,0 à 200,0.

10. Composition selon l'une quelconque des revendications 1-9, dans laquelle le polycarbonate bromé comprend ou consiste en des unités répétitives dérivées (i) d'unités répétitives de carbonate aromatique bromé dérivées de 2,2',6,6'-tétrabromo-4,4'-isopropylidènediphénol ; et (ii) d'unités répétitives de carbonate aromatique dérivées de bisphénol A.

11. Composition selon l'une quelconque des revendications 1-10, dans laquelle la composition comprend moins de 0,5 % en poids, sur la base du poids total de la composition, de composés ignifuges supplémentaires, de préférence dans laquelle les composés ignifuges supplémentaires sont choisis parmi les phosphates organiques, le polyétherimide (PEI), le polyphénylène éther (PPE), les composés organophosphorés aromatiques présentant deux ou plusieurs groupes contenant du phosphore, les composés organiques contenant des liaisons phosphore-azote, les agents ignifuges halogénés, les agents ignifuges inorganiques et leurs combinaisons.

12. Composition selon l'une quelconque des revendications 1-11, dans laquelle la composition présente ou est choisie pour présenter :
- une densité de fumée après 4 minutes (Ds4) inférieure ou égale à 300,0 déterminée conformément à la norme ISO 5659-2 sur une plaque de 3,0 millimètres d'épaisseur à 50,0 kW/m² ;
- une densité de fumée (VOF4) inférieure ou égale à 600,0 déterminée conformément à la norme ISO 5659-2 sur une plaque de 3,0 millimètres d'épaisseur à 50,0 kW/m² ;
- un dégagement thermique moyen maximal (MAHRE) inférieur ou égal à 90,0 kW/m² mesuré conformément à la norme ISO 5660-1 sur une plaque de 3,0 millimètres d'épaisseur à 50,0 kW/m² ; et
- un flux thermique critique à l'extinction (CFE) supérieur ou égal à 20,0 kW/m² déterminé conformément à la norme ISO 5658-2.

13. Composition selon la revendication 1, dans laquelle, sur la base du poids total de la composition
- le copolymère poly(carbonate-siloxane-arylate ester) est présent en une quantité de 20,0 % en poids à 40,0 % en poids ;
- le polycarbonate bromé est présent en une quantité de 20,0 % en poids à 40,0 % en poids ;
- la fibre de verre est présente en une quantité de 12,0 % en poids à 18,0 % en poids ; et
- l'homopolymère de polycarbonate est un homopolymère de polycarbonate linéaire, présent en une quantité de 12,0 % en poids à 18,0 % en poids :
de préférence dans laquelle la composition présente ou est choisie pour présenter :
(i) une densité de fumée après 4 minutes (Ds4) inférieure ou égale à 150,0 déterminée conformément à la norme ISO 5659-2 sur une plaque de 3 millimètres d'épaisseur à 50,0 kW/m² ;
(ii) une densité de fumée (VOF4) inférieure ou égale à 300,0 déterminée conformément à la norme ISO 5659-2 sur une plaque de 3,0 millimètres d'épaisseur à 50,0 kW/m² ;
(iii) un dégagement thermique moyen maximal (MAHRE) inférieur ou égal à 60,0 kW/m² mesuré conformément à la norme ISO 5660-1 sur une plaque de 3 millimètres d'épaisseur à 50,0 kW/m² ; et
(iv) un flux thermique critique à l'extinction (CFE) supérieur ou égal à 20,0 kW/m² déterminé conformément à la norme ISO 5658-2.

14. Article comprenant la composition selon l'une quelconque des revendications 1-13, de préférence dans lequel l'article est adapté pour être utilisé dans des systèmes de transport de masse, de préférence dans lequel l'article est au moins l'un quelconque d'un composant ferroviaire, d'un composant aérospatial ou d'un composant automobile.

15. Utilisation de la composition selon l'une quelconque des revendications 1-13 pour améliorer les propriétés ignifuges d'un article utilisé dans les systèmes de transport de masse.
